# EUROPEAN PATENT APPLICATION

(11) **EP 0 707 159 A1**
(43) Date of publication of application: **17.04.1996**
(21) Application number: 94114709.2
(22) Date of filing: 19.09.1994
(51) Int. Cl.: F16C 29/04

(54) **Guide wheel bracket**

(71) Applicant: Continental Aktiengesellschaft, D-30165 Hannover (DE)
(72) Inventor: McKenzie, Ian André, Edenvale 1610, Transvaal (ZA)

(57) **Abstract**

A mounting bracket for a roller used to guide a conveyance within a shaft and includes first and sencond biassing means and support means for a follower.

## Description

This invention relates to a mounting bracket. More particularly, but not exclusively, this invention relates to a mounting bracket for a roller used to guide a conveyance within a shaft.

According to the invention a mounting bracket includes:
first and second biassing means; and
support means for a follower.

The first biassing means may have a greater stiffness than the second biassing means.

The first and second biassing means may be located in series with one another. However the first and second biassing means may be located in parallel with one another.

The mounting bracket may include a damper.

The support means may be mounted on a slide located on a slideway.

The first biassing means may exert an increasing force during its compression.

The second biassing means may exert substantially constant force during its extension and compression.

The follower may be a roller, wheel or the like.

According to another aspect of the invention a method of biassing a follower from a median position may include the steps of exerting a substantially constant force on the follower when it moves in one direction from its median position and exerting an increasing force on the follower when it moves in the opposite direction from its median position.

The increasing force may increase from the level of the substantially constant force. The increasing force may increase substantially exponentially.

The invention will now be described by way of non-limiting examples with reference to the accompanying drawings in which:
- figure 1: is an end view of a mounting bracket with side roller mounted on it;
- figure 2: is a cross-sectional side view on line II-II of figure 1;
- figure 3: is an end view of a mounting bracket according to another embodiment of the invention with a centre roller mounted to it;
- figure 4: is a cross-sectional side view on line IV-IV of figure 3;
- figure 5: is a diagrammatic plan view showing three mounting brackets with their rollers abutting a guide rail;
- figure 6: is a cut-away, cross-sectional end view of a slide and slide-way used in the mounting brackets;
- figure 7: is a graph of the force exerted by the biassing means on the guide rail via the roller moves from its median position; and
- figure 8: is a side view of a mounting bracket according to yet another embodiment of the invention.

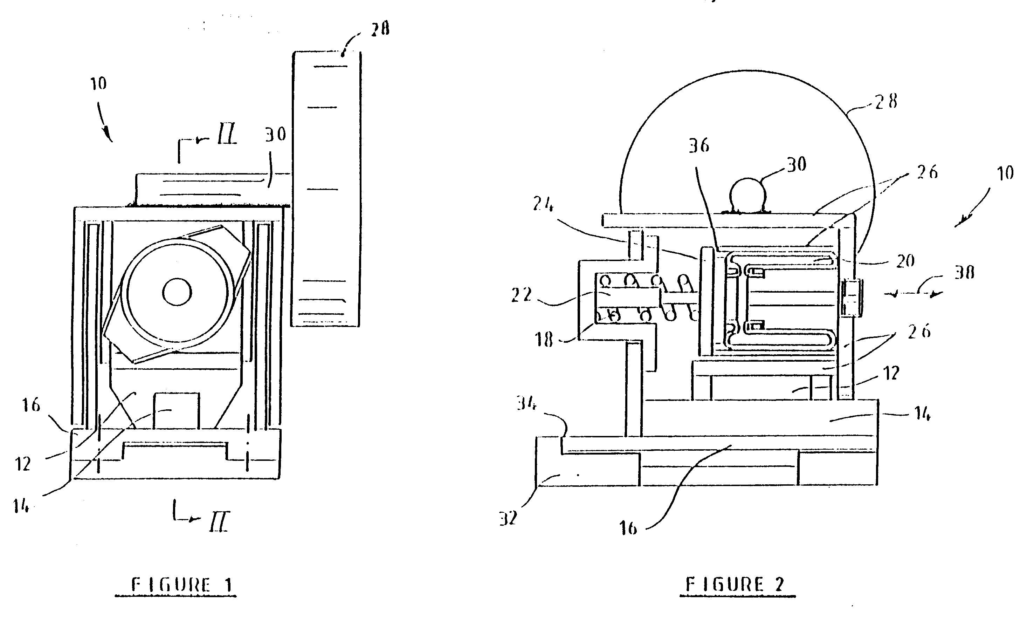

Referring firstly to figures 1 and 2, a mounting bracket 10 includes a slide 12 slidably mounted on a slideway 14. The slideway 14 is secured to a foundation 16.

First biassing means in the form of a spring 18 is secured to the foundation. Second biassing means in the form of an air bag 20 is connected in series with the spring 18. A damper 22 is provided for damping the spring 18.

Stopper means in the form of a stopper plate 24 is interposed between the spring 18 and the air bag 20.

Attachement means in the form of a frame 26 is secured to the slide. A side roller 28 is rotatably secured via a shaft 30 to the frame 26.

The foundation 16 is secured to base plate locating plates 32. The foundation 16 can be adjusted relative to the base plate locating plates 32 by the insertion of shims (not shown) in a gap 34. The foundation 16 is adjusted to accommodate wear of the roller 28.

The stopper plate 24 limits movement of the air bag 20 during its compression stroke. As the air bag 20 is compressed so the gap shown by reference numeral 36 decreases until it is non-existent. At this point the air bag 20 cannot be compressed any more. Further compression is then accommodated by the spring 18. Arrow 38 indicates the direction of axial movement on the slide and hence the frame 26, air bag 20 and the roller 28.

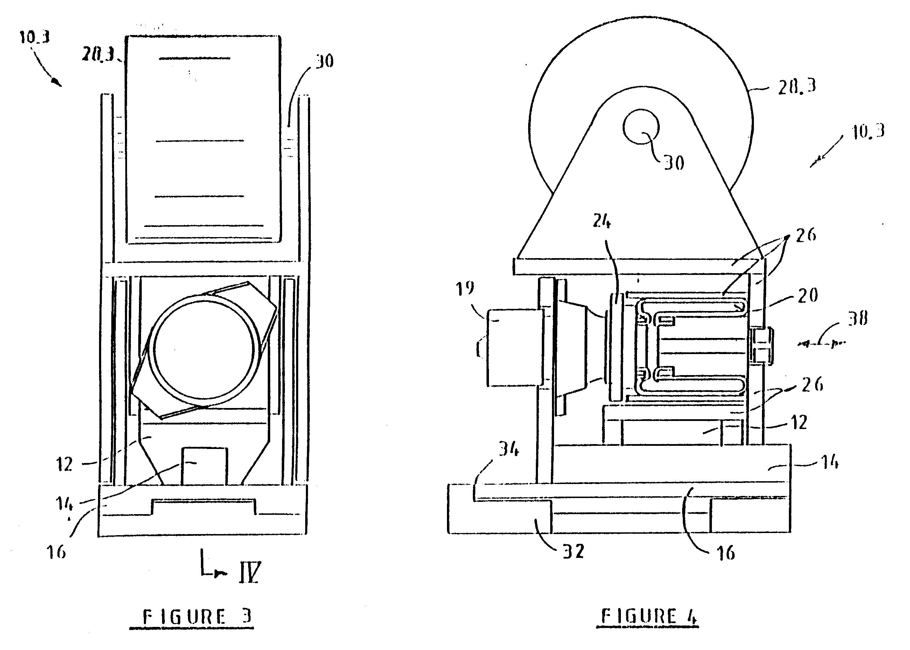

Figures 3 and 4 show a mounting bracket 10.3 which is similar to that shown in figures 1 and 2 except that a spring-cum-damper 19 known by the trade name "Hydrolager" is used to replace the spring 18 and damper 22 shown in figure 2. A centre roller 10.3 is mounted to the mounting bracket.

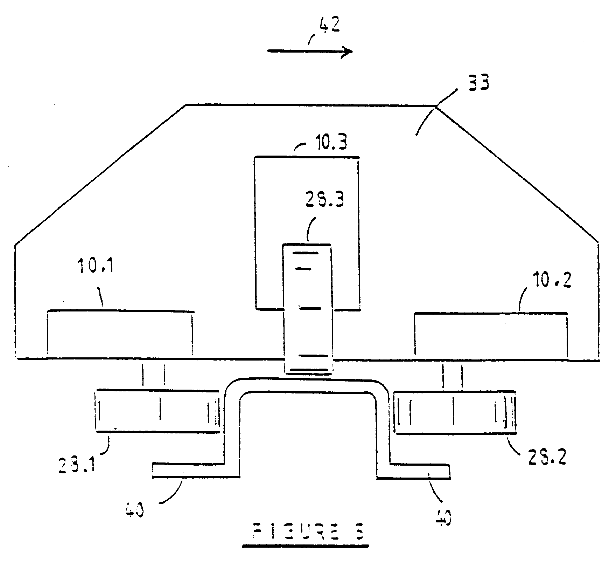

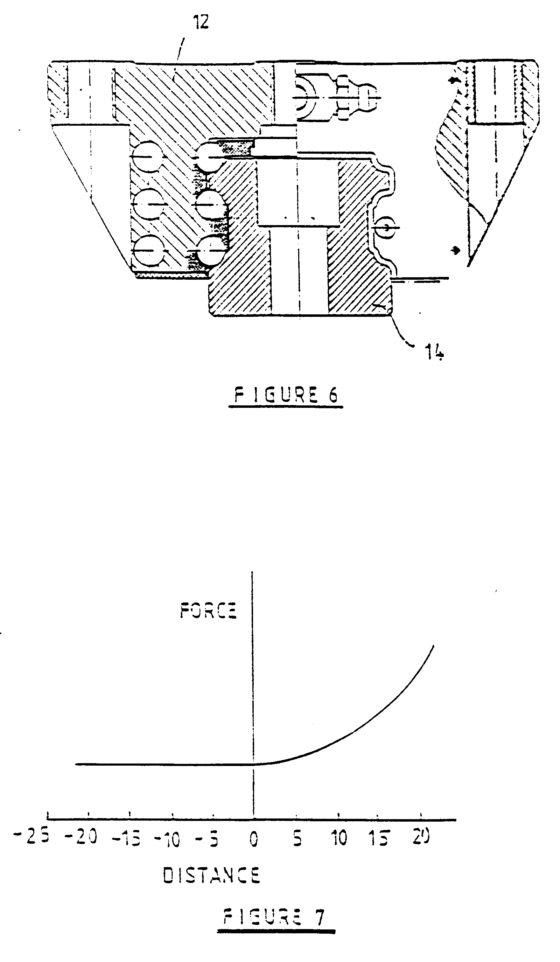

The operation of the mounting brackets will now be described with reference to figures 5 and 7. In figure 5, two side mounting brackets 10.1 and 10.2 with rollers 28.1 and 28.2 are mounted on a base plate 33. A centre mounting bracket 10.3 with a roller 28.3 is also mounted on the base plate 33. The base plate 33 is secured to a bridle or bridle frame (not shown) of a cage of skip (also not shown). The three rollers are in contact with a guide rail 40 which is also known as a top hat guide.

The side rollers 28.1 and 28.2 are in their median positions which is reflected as zero deflection on the graph shown in figure 7.

As the cage moves say 20 millimetres to the right in the direction of arrow 42, the force exerted by roller 28.2 on the guide rail 40 remains substantially constant over this distance. This is shown on the left-hand side of the graph. The wheel 28.2 remains in contact with the guide rail 40 all the time since the air bag expands and moves the slide 12 and hence the wheel 28.2 through 20 millimetres. It is a characteristic of the air bag 20 that as it expands, the force it exerts remains substantially constant. This air bag could of course be replaced with a spring which has substantially the same characteristics.

The movement of 20 millimetres in the direction of arrow 42, results in a rapid increase in the force exerted by the roller 28.1 on the guide rail 40. This is shown in the right hand side of the graph. The rapid increase in force comes about because the air bag 20 cannot be compressed because the gap 36 is closed and thus the load is borne by the spring 18 which has a high stiffness.

It will be appreciated that the force exerted by roller 28.2 on the guide rail 40 adds to the force exerted on roller 28.1. Thus by ensuring that roller 28.2 only exerts a low force on the guide rail, the force exerted on roller 28.1 is reduced relative to the prior art situation in which both mounting brackets have springs of equal stiffness.

When the cage moves in the opposite direction to arrow 42, roller 28.1 exerts a low constant force against the guide rail and roller 28.2 exerts a high force against the guide rail.

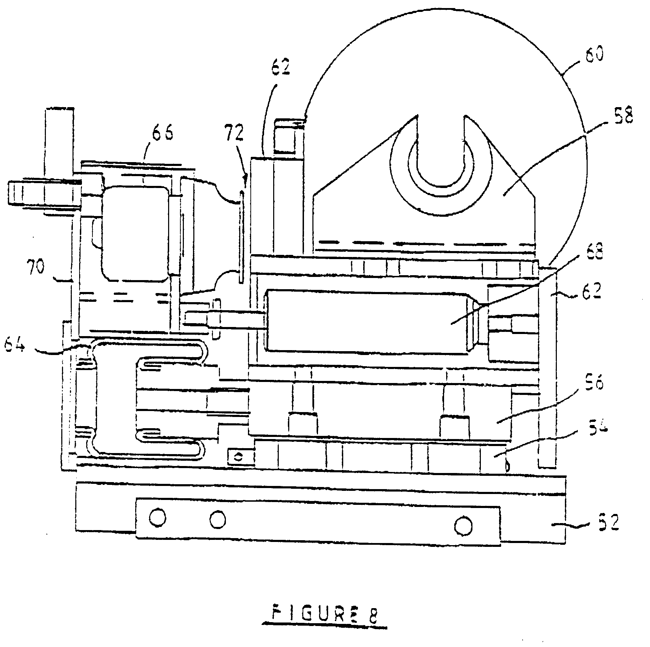

Referring now to figure 8, a mounting bracket 50 consists of a base 52 which is secured a slideway 54. A slide 56 is slidably mounted on the slideway 54. A roller bracket 58 for a roller 60 is mounted via a housing 62 to the slide 56. Thus the roller 60 can slide relative to the base 52. An air bag 64 and a Hydrolager device 66 are mounted in parallel relative to the housing 62. A damper 68 extends between the housing 62 a back plate 70 to which the air bag 64 and the Hydrolager device 66 are secured.

The roller 60 is shown in its median position in figure 8. The roller 60 can move to the right under the influence of the air bag 64. The air bag 64 simply expands and exerts a substantially constant force as the roller 60 moves to the right. When the roller 60 moves to the left from its median position, the air bag 64 is compressed until the gap shown by arrow 72 is closed. Thereafter the Hydrolager device 66 exerts an exponentially increasing force on the housing 62 and thus on the roller 60, as the roller 60 moves further to the left.

The damper 62 damps out vibrations and has the ability not to increase the force it exerts when the speed of the slide exceeds about 300mm/sec.

It will be appreciated that many modifications or variations of the invention are possible without departing from the spirit or scope of the invention. For example, although the invention has been described with reference to a slide and slideway, the applicant believes that the same result can be achieved with a pivotally mounted arm as opposed to the slide and slideway. The invention accordingly extends to this aspect as well.

## Claims

1. A mounting bracket including:
first and second biassing means; and
support means for a follower.

2. The mounting bracket of claim 1 wherein the first biassing means has a greater stiffness than the second biassing means.

3. The mounting bracket of claim 1 or claim 2 wherein the first and second biassing means are located in series with one another.

4. The mounting bracket of claim 1 or claim 2 wherein the first and second biassing means are located in parallel with one another.

5. The mounting bracket of any of the above claims including a damper.

6. A mounting bracket of any of the above claims wherein the support means is mounted on a slide located on a slideway.

7. The mounting bracket of any of the above claims wherein the first biassing means exerts an increasing force during its compression.

8. The mounting bracket of any of the above claims wherein the second biassing means exerts a substantially constant force during its extension.

9. The mounting bracket of any of the above claims wherein the follower is a roller, wheel or the like.

10. A mounting bracket substantially as herein described and illustrated with reference to the accompanying drawings.

11. A method of biassing a follower from a median position including the steps of exerting a substantially constant force on the follower when it moves in one direction from its median position and exerting an increasing force on the follower when it moves in the opposite direction from its median position.

12. The method of claim 11 wherein increasing force increases from the level of the substantially constant force.

13. The method of claim 11 or claim 12 wherein the increasing force increases substantially exponentially.

14. A method of biassing a follower from a median position substantially as herein described and illustrated with reference to the accompanying drawings.
